# EUROPEAN PATENT APPLICATION

(11) **EP 1 130 880 A1**
(43) Date of publication of application: **05.09.2001**
(21) Application number: 00830156.6
(22) Date of filing: 29.02.2000
(51) Int. Cl.: H04M 1/05, H04R 1/10, H04R 5/033

(54) **Headset and head support for headset.**

(71) Applicant: Silicomp SPA, 20090 Opera (Milano) (IT)
(72) Inventor: Ceravolo,Bruno, 20090 Opera, Milano (IT)
(74) Representative: Petruzziello, Aldo

(57) **Abstract**

An audio headset (100; 200) comprising at least one earphone element (2) for the diffusion of sound, destined to be positioned level with a user's ear supported by an elastic headband (3), and at least one head support element (115, 201), mounted on the elastic headband (3) in such a manner as to come to rest against a part of the user's skull to support the headset, discharging the weight of the headset and the pressure due to the elastic force exerted by the headband on to said part of the user's skull (3).

## Description

The present invention refers to a headset and a head support for a headset.

Headsets generally comprise an earphone assembly consisting of one or more electroacoustic transducers able to generate an audio signal that can be heard by the user. Said transducers are mechanically connected by means of an elastic headband, generally adjustable, in such a manner that each transducer can be positioned level with the user's outer ear. Consequently the entire weight of the headset is borne by the user's ears. Furthermore, the elastic headband generates an elastic force that urges the earphone assembly toward the user's ears.

For this reason, the transducers are generally covered by means of ear pads or rings of soft material so as not to cause too much discomfort to the user's ear.

Despite the earphone assembly having said soft pads, the whole weight of the headset and the pressure exerted by the elastic force of the headband are discharged on to the user's ears and can cause discomfort, pain and irritations of the outer ear.

Telephone type headsets further comprise a microphone connected to one of the two transducers and adjustable so that it can be positioned near the user's mouth. Clearly the microphone represents an additional weight for the headset, aggravating the pressure on the user's ears.

This problem proves more serious in particular for users obliged to wear the headsets for long periods of time, such as switchboard operators and call-center operators.

The object of the invention is to eliminate the drawbacks illustrated, providing a comfortable and convenient headset.

This object is achieved according to the invention with the audio headset according to appended independent claim 1.

Preferred embodiments of the invention are apparent from the dependent claims.

The audio headset according to the invention comprises two earphone elements supported by an elastic headband and two head support elements mounted on the elastic headband in such a manner as to rest on two parts of the user's skull in order to be able to block and support the headset.

In this manner the weight of the headset and the pressure due to the elastic force exerted by the elastic headband are discharged, through the head support elements, on to the user's skull, reducing the discomfort caused by the pressure of the earphone assembly on the user's ears.

Each head support element is provided with an interchangeable pad of soft material, dipsosed on the side that rests on the user's skull, so as to cushion the pressure exerted on this part of the user's skull.

In order to adapt the headset according to the invention to the shape of the user's skull, the head support elements are mounted slideably on the headband, so as to be able to be moved and adjusted according to the user's requirements.

The earphone assembly also is adjustable in order to be able to shift the weight and pressure of the headset from the outer ear to the part of the skull in contact with the head support.

Automatic adjustment of the earphone assembly of the headset also occurs by means of a spring disposed between the headband and the earphone assembly. In this manner when the headset is worn the earphone assembly adapts automatically to the shape of the outer ear and the headset is supported and held still by the head supports which are in contact with user's skull.

The audio headset according to the invention, though still maintaining the characteristics previously listed, can be of the monoaural type, that is, it can be provided with only one earphone element destined to be positioned in proximity to the ear.

The advantages of the audio headset and the head support for audio headsets according to the invention are evident. Thanks to the provision of the head support elements that rest on the user's skull it is possible to reduce considerably the discomfort due to the pressure of the earphone assembly on the user's ears.

Further characteristics of the invention will be made clearer by the detailed description that follows, referring to purely exemplary and therefore non limiting embodiments thereof, illustrated in the appended drawings, in which:
Figure 1 is a perspective view of a binaural headset with head support, according to the invention;
Figure 2 is a front view of the headset in Figure 1, worn by a user;
Figure 3 is a perspective, partially exploded view of the headset of Figure 1;
Figure 4 is a perspective view of a monoaural headset with head support according to the invention.
Figure 5 is a partial exploded view, in perspective, of the monoaural headset in Figure 4.

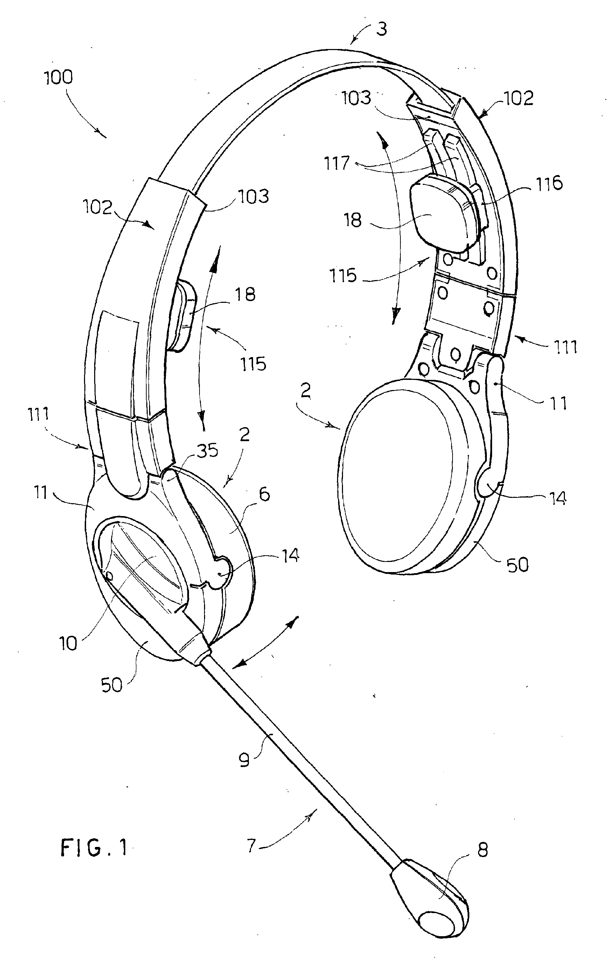

A first embodiment of the invention is described with the aid of Figures 1-3.

A telephone headset of the binaural type is denoted as a whole by reference numeral 100. The telephone headset 100 comprises an earphone assembly formed of two earphone elements 2 connected mechanically by means of an elastic headband 3, formed by a steel structure covered by a sheath 70. In this manner, when the headset 1 is worn by the user, the earphone elements 2 come level with the user's outer ears.

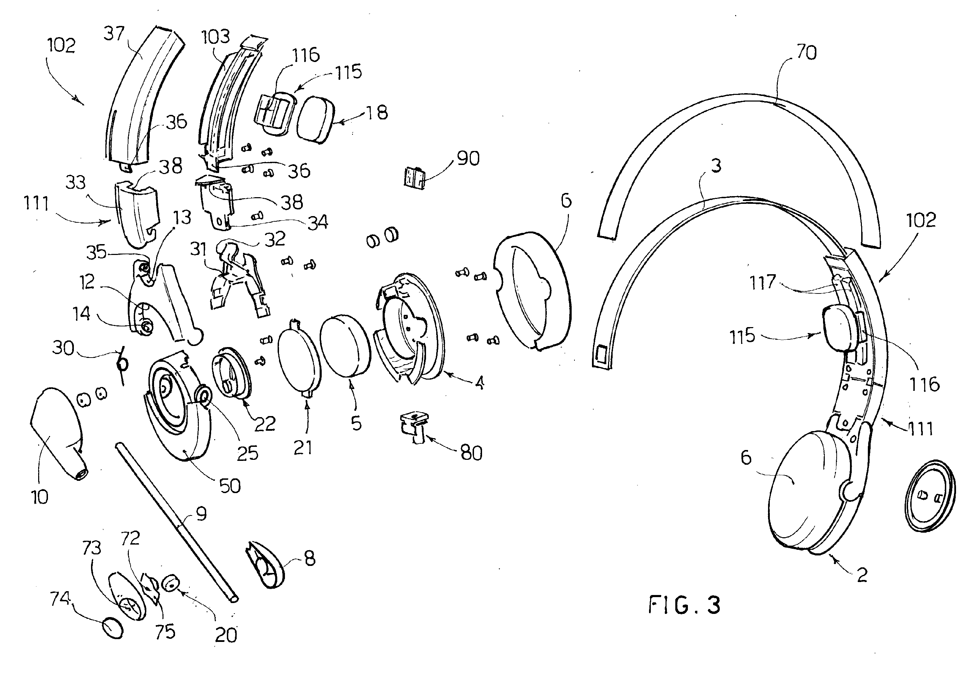

Each earphone element 2 comprises an electroacoustic transducer 5 (loudspeaker), to convert the incoming electrical signal into an audio signal that can be heard by the user. As shown in Figure 3, the electroacoustic transducer 5 is housed in a transducer holder 4, which is closed by means of a printed circuit 21 acting as a cover. Inserted between the printed circuit 21 and the transducer holder 4 is a wirelead 80 that supports the electrical wires that carry the input and output electrical signals. The transducer holder 4 is then fixed by means of screws to an annular support 50.

Fitted on the side of the transducer holder 4 facing toward the user's ear is a ring or ear pad 6 made of soft material, such as sponge, which has air spaces that permit the diffusion of sound and is deformable so as not to cause discomfort to the ear of the user.

In the headset 100, one of the earphone elements 2 has means 7 for conveying the voice coming from the user's mouth. Said voice conveying means 7 comprise a microphone assembly 8 consisting of two half-shells that enclose a transducer element 20 to convert the acoustic signal into an electrical signal and a printed circuit 75. One of the half-shells of the microphone 8 bears a transparent lens 74 so that it can be passed through by the light of a LED 72 assembled on the printed circuit 75 provided within the half-shells of the microphone 8. The LED 72 lights when the operator is engaged in a telephone conversation, thus indicating to others that the operator is engaged.

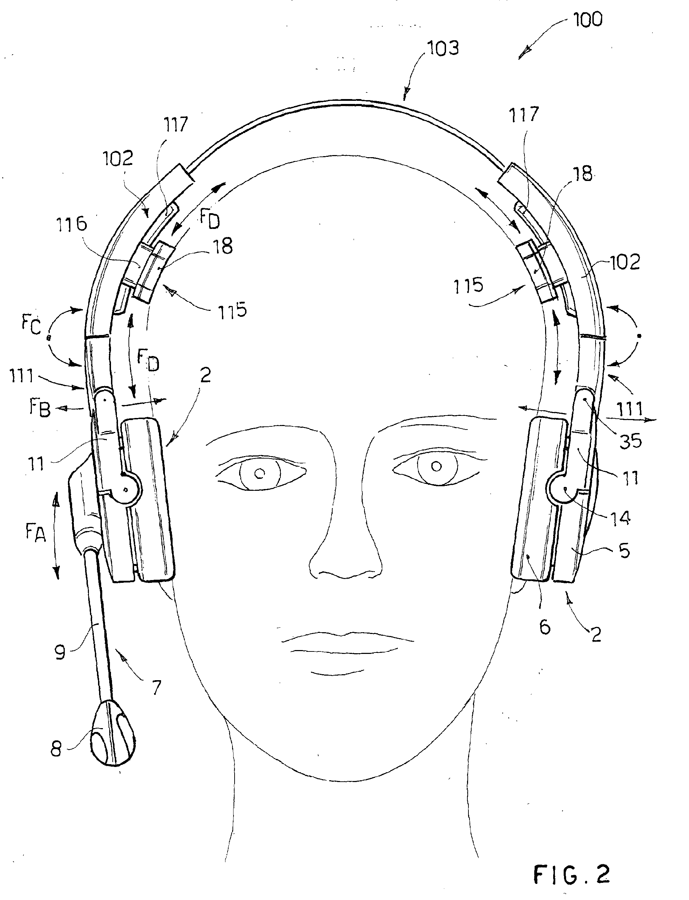

The microphone assembly 8 is supported by a flexible tube 9 within which pass the wires for conveying the electrical signal corresponding to the voice signal picked up by the microphone 8. The end of the tube 9 opposite the microphone 8 is spring inserted or glued in a seat provided in a microphone holding cover 10 having a base like a circular plate. The base of the microphone holding cover 10 is fixed rotatably in the side of the annular support 50 opposite the side that receives the ear pad 6. A positioning spring 22 is mounted in the annular support 50 for positioning of the microphone holding cover 10. In this manner the plate of the microphone holder 10 can trun around its own axis in the direction of the arrrows F_{A} in Figure 2, allowing the position of the microphone 8 to be adjusted.

Instead of the microphone 8 and the tube 9, the means 7 can provide a voice tube that carries the voice directly from the user's mouth to the transducer elements 20 which in this case are disposed inside the earphone assembly 2.

The earphone element 2 comprises a substantially X-shaped fork 11 having an arched bottom seat 12 and an arched top seat 13. The fork 11 is spring-fixed to the annular support 50 by means of special pins 14 that engage in respective holes 25 provided in the annular support 50 in such a manner that the fork 11 is hinged to the annular support 50. Between the fork 11 and the annular support 50 a spring 30 is provided that permits rotation of the support 50 and of the fork 11 around the pins 14 to be adjusted according to the earphone assembly 2 rest on the user's ear. In this manner the auricle of the user's ear is completely closed by the earphone assembly 2.

A cover 31 with a spring 32 that protrudes from the seat 13 of the fork 11 is assembled to the fork 11. The cover 21 and the spring 32 are obtained by molding in a single piece. Said cover 31 serves to contribute to automatic regulation of the earphone assembly exploiting the elasticity of the spring 32 integral therewith.

The spring 32 is enclosed inside an intermediate element 111 consisting of a half-shell 33 and a cover 34. The half-shell 33 is hinged at pivots 35 provided in the fork 11. In this manner the fork 11 can make a pantograph movement making the earphone assembly 2 articulated with respect to the intermediate element 111. The fork 11 is hinged at 14 to the annular support 50 and at 35 to the intermediate element 111 and therefore can move in the direction of the arrows F_{B} in Figure 2.

The intermediate element 111 is provided with an axial hole 38 to accommodate a pin 36 provided in a guide 102 formed by two half-shells 37 and 103. In this manner a further degree of freedom is added to the movements of the earphone assembly 2. In fact the intermediate element 111, integral with the earphone assembly 2, can turn around the axis of the pin 36 of the guide 102 in the direction of the arrows F_{c} in Figure 2, in order to adapt the earphone element 2 to the user's outer ear.

The half-shell 103 of the guide 102 has on its side facing the user's skull a head support element 115. The head support element 115 has a slide 116 that slides on rails or racks 117 provided on the half-shell 103 of the guide 102. In this manner the head support 115 can translate in the direction of the arrrows F_{D} in Figure 2. On the slide 116 is fixed a soft element or pad 18, preferably made of rubber or sponge, to cushion the weight of the headset discharged on to the user's skull.

The two guides 102 receive telescopically the two ends of the headband 3 which have respective means of spring locking 90. The headband 3 can make a stroke inside the guides 102 for adjustment of the headset 100. In this manner the head support 115 sliding over the racks 117 can rest on the user's skull and thus part of the weight of the headset is discharged on to the user's skull.

The headset 100 has various possibilities for adjustment. When the user is wearing the headset 100, by making the guides 102 slide telescopically on the headband 3 he can adjust the position of the earphone elements 2 in such a manner that they are situated in proximity to the ears and consequently the head supports 115, by sliding on the respective racks 117, settle on the user's skull.

The intermediate element 111 makes the earphone element 2 articulated with respect to the guide 102; in this manner the earphone element 2 adapts perfectly to the shape of the user's outer ear.

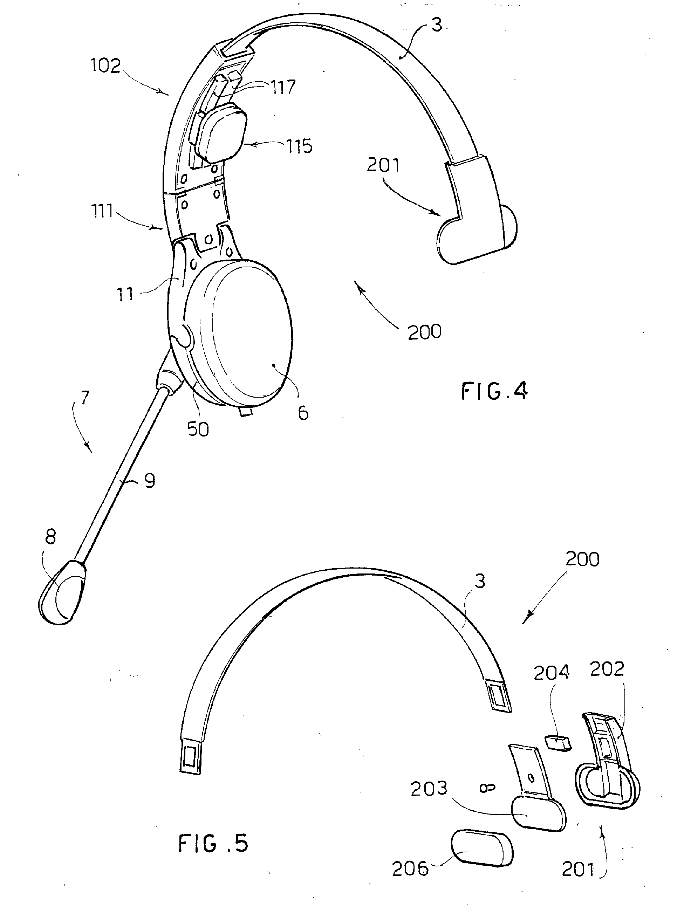

With reference to Figures 4 and 5, a second embodiment of the invention is described, concerning a monoaural headset with head support, denoted as a whole by reference numeral 200. In this second embodiment like or corresponding parts are indicated with the same reference numerals used in the first embodiment

In the headset 200 the earphone element 2 without voice conveying means 7 is eliminated and replaced by a head support 201 mounted on the elastic headband 3. As shown in Figure 5, the head support 201 comprises a half-shell 202 and a cover 203 between which is interposed an elastic element 204 to cushion the pressure of the cranial support 201. A pad 206 made of rubber or sponge, destined to come into contact with a part of the user's skull, is applied to the cover 203.

Various changes and modifications of detail within the reach of a skilled in the art can be made to the present embodiments of the invention without thereby departing from the scope of the invention expressed in the appended claims.

## Claims

1. An audio headset (100; 200) comprising at least one earphone element (2) for diffusion of sound, and an elastic headband (3) to support said at least one earphone element in a position in proximity to a user's ear, **characterized in that** it comprises at least one head support element (115; 201), mounted on said elastic headband (3), so as to come to rest against a part of the user's skull in order to support the headset (100; 200), discharging the weight of the headset and the pressure due to the elastic force exerted by the headband (3) on to said part of the user's skull.

2. A headset according to claim 1, **characterized in that** said head support element (115) is mounted slidably on said elastic headband (3), so as to be able to be adjusted in position according to the user's requirements.

3. A headset according to claim 2, **characterized in that** said head support element (115) is connected to a guide (102) of said elastic headband (3) which couples telescopically with said elastic headband (3).

4. A headset (100;200) according to claim 3, **characterized in that** said head support element (115) comprises a slide (116) sliding on rails or racks (117) provided on said guide (102) of said elastic headband (3).

5. A headset (100; 200) according to one of the preceding claims, **characterized in that** said earphone element (2) is assembled in an articulated manner with respect to said elastic headband (3) and/or said head support element (115), in such a manner that the earphone element (2) can adapt to the shape of the user's outer ear.

6. A headset (100; 200) according to any one of claims 3 to 5, **characterized in that** it comprises a fork (11) hinged respectively to said guide (102) bearing the head support element (115) and to said earphone element (2), to make the earphone element (2) articulated with respect to said guide (102).

7. A headset according to claim 6, **characterized in that** between said fork (11) and said earphone element (2) is provided a spring (30) that allows the earphone element (2) to adapt automatically to the user's outer ear.

8. A headset according to claim 6 or 7, **characterized in that** between said fork (11) and said guide (102) is provided an intermediate element (111) hinged at a pivot (36) of said guide (102) to allow rotation of the earphone element (2) around the axis of said pivot (36).

9. A headset according to claim 8, **characterized in that** inside said intermediate element (111) is provided a spring (32) that allows automatic adjustment of said earphone element (2).

10. A headset according to claim 9, **characterized in that** said spring is a plastic spring (32) obtained by molding in a single piece with a cover (31) of said fork (11).

11. A headset (100; 200) according to any one of the preceding claims, **characterized in that** said head support element (115; 201) comprises a pad element (18; 204), made of soft material such as rubber or sponge, destined to come into contact with the user's skull.

12. A headset (100; 200) according to any one of the preceding claims, **characterized in that** means (7) for conveying the voice coming from the user's mouth are connected to said earphone element (2).

13. A headset according to claim 12, **characterized in that** said voice conveying means (7) comprise a microphone assembly (8) that provides a LED (72) that lights when the user is engaged in conversation by means of the headset.

14. A head support (115; 201) for an audio headset (100; 200) comprising at least one earphone element (2), supported by an elastic headband (3) destined to be positioned in proximity to the user's ear, said head support element (115; 201) being mounted on said elastic headband (3) in such a manner as to come to rest against a part of the user's skull to support the headset, discharging the weight of the headset and the pressure due to the elastic force exerted by said headband (3) on to said part of the user's skull.

15. A head support (115) according to claim 14, **characterized in that** it is mounted slidably on said elastic headband (3), in order to be able to be adjusted in position.
